Europäisches Patentamt

European Patent Office

Office européen des brevets

(19)

(11) Publication number: **0 221 647**
**B1**

(12) # EUROPEAN PATENT SPECIFICATION

(45) Date of publication of the patent specification:
26.07.89

(21) Application number: 86306850.8

(22) Date of filing: 04.09.86

(51) Int. Cl.⁴: **B23K 1/20**

(54) Methods of fabricating fibre reinforced metal matrix composites.

(30) Priority: 18.10.85  US 789209

(43) Date of publication of application:
13.05.87 Bulletin 87/20

(45) Publication of the grant of the patent:
26.07.89 Bulletin 89/30

(84) Designated Contracting States:
DE FR GB IT NL

(56) References cited:
DE-A- 2 908 829
GB-A- 1 065 023
US-A- 3 638 298

(73) Proprietor: THE BABCOCK & WILCOX COMPANY,
1010 Common Street P.O. Box 60035, New Orleans
Louisiana 70160(US)

(72) Inventor: Rigdon, Michael Andrew, 11905 Millpond
Court, Manassas Virginia 22111(US)
Inventor: Zurlippe, Clemens Friedrich, 111 Lynwood
Drive, Madison Heights Virginia 24572(US)

(74) Representative: Cotter, Ivan John et al, D. YOUNG &
CO. 10 Staple Inn, London WC1V 7RD(GB)

ACTORUM AG

## Description

This invention relates to methods of fabricating fibre reinforced metal matrix composites.

Metal matrix composites hold great promise as materials that can provide improved structural rigidity in components with designs governed by strength to weight ratio considerations or which must retain high elastic modulus values at elevated temperatures.

The application of standard composite fabricating techniques to metal matrix composites is limited by the fact that it is difficult to establish sound solid state bonds between fibres and metal matrices, especially under conditions where the fibres cannot be subjected to stretch deformation.

US Patent No. US-A 3 638 298 discloses a method of fabricating a fibre-reinforced metal matrix composite, the method comprising the steps of:

(i) rotating a mandrel while a single strand of filament is wound around the mandrel and a matrix sheet;

(ii) inserting the assembly of the mandrel, the wound filament and the matrix sheet into a retort;

(iii) evacuating the retort; and

(iv) applying heat and pressure to the retort and its content to effect solid-state joinder (diffusion bonding) of the wound filament and the matrix sheet.

According to the present invention there is provided a method of fabricating a fibre-reinforced metal matrix composite, the method comprising the steps of:

(a) fitting a braided fibre tube over a metallic core;

(b) applying tension to bring the braided fibre tube into contact with the core;

(c) fixing the tensioned braided fibre tube in place relative to the core;

(d) mounting a braze foil around the braided fibre tube;

(e) securing the braze foil;

(f) inserting the so-assembled assembly of the core, the braided fibre tube and the braze foil into a capsule;

(g) evacuating the capsule;

(h) applying increasing temperature and pressure to the capsule to collapse the capsule onto the assembly, the temperature being below the flow point of the braze foil;

(i) further raising the temperature to above the flow point of the braze alloy of the braze foil to induce flow of the braze alloy;

(j) maintaining the raised temperature for a short time; and

(k) lowering the temperature to a value below the flow point of the braze foil and maintaining said lower temperature to allow solidification and annealing of the resulting fibre reinforced metal matrix composite.

In a preferred embodiment of the invention described hereinbelow, a fibre-reinforced metal matrix composite is produced from a braided fibre sleeve or tube that is fitted over a metal insert that initially acts as a support mandrel. The braided fibre sleeve is then axially tensioned to cause it to come into intimate contact with the insert over the entire length of the sleeve. Each end of the tensioned, braided fibre sleeve is fixedly secured. Next, a braze foil is wrapped around the sleeve. The braze foil is also secured to prevent movement. The assemblage of the insert, braided fibre sleeve and braze foil is inserted into a tubular capsule. The ends of the tubular capsule are sealed and the tubular capsule is evacuated. The evacuated tubular capsule containing the assemblage is subjected to increasing temperature and pressure until the tubular capsule is caused to creep collapse onto the assemblage; the temperature of the capsule and assemblage, at this stage of the process, is maintained below the flow point of an alloy of the braze foil. Thereafter, the temperature is raised to a value above the braze foil alloy flow point to induce flow of the braze foil alloy and wetting of the composite fibres. After a few minutes, the temperature is lowered to allow solidification and solution-annealing of the resulting fibre reinforced metal composite.

The braided fibre sleeving can be utilised to provide circular and out-of-round cross sectional tubular metal matrix composites.

The invention will now be further described, by way of illustrative example, with reference to the accompanying drawings, in which:

Figure 1 is a longitudinal section of a device for bonding fibres into a metal matrix;

Figure 2 is a perspective view, partly broken away, of a part of a core bearing a braided fibre tube and an outer wrapping of a braze foil; and

Figure 3 is a cross-sectional view of a retort containing the device of Figure 1 with a braided fibre tube and braze foil mounted therein (and shown on a larger scale for clarity of illustration) in preparation for bonding in accordance with a preferred method embodying the invention.

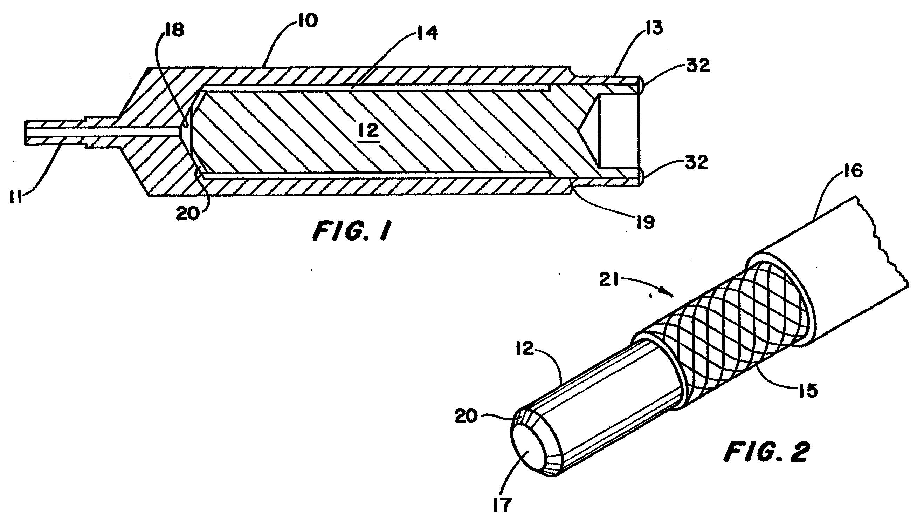

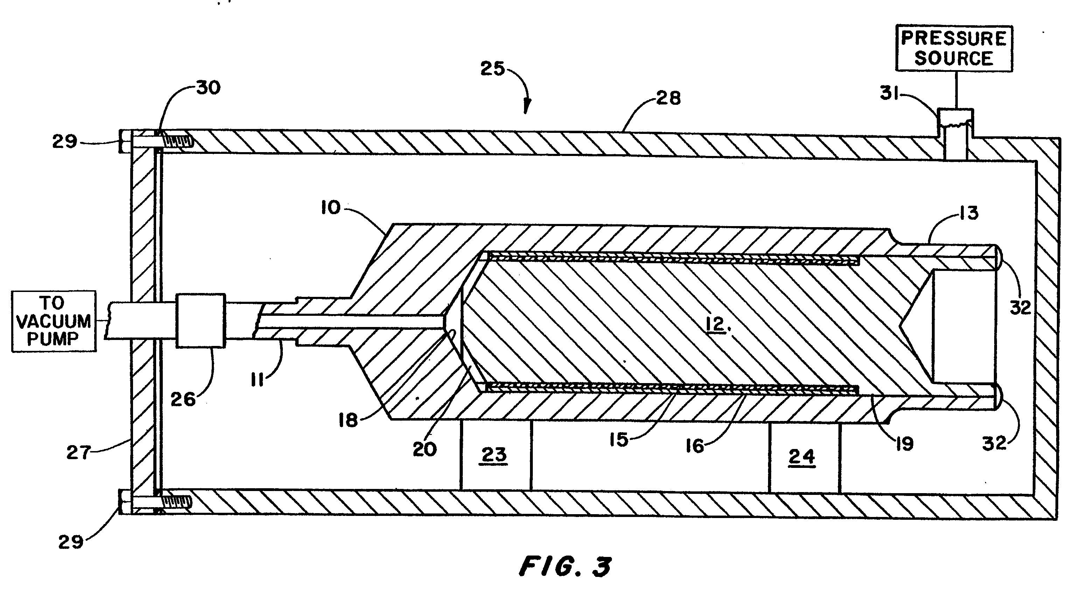

Figure 1 shows a bonding device for forming a fibre-reinforced metal composite. The device includes an outer tubular capsule 10 having a generally cylindrical bore extending from a first, open-end portion 11 to a second, cylindrical open-end portion 13. The first end portion 11 provides a suitable connection for connecting the bore to means, such as a vacuum pump, for evacuating the capsule 10 in a known manner. The open-end of the end portion 13 provides a means for insertion of a metallic core, insert or substrate 12 which is shown in Figure 1 inserted into the bore of the capsule 10. The insert 12 is radially spaced from the inner periphery of the capsule 10 so as to form a longitudinal annulus 14. The annulus 14 provides a suitable clearance for accommodating a preformed braided fibre tube or sleeve 15 and an encapsulating braze foil 16 mounted upon the insert 12 as best shown in Figures 2 and 3.

In a preferred design of the bonding device, the insert 12 comprises a solid cylindrical bar provided with a forward chamfer 17 which abuts upon a shoulder or wall surface 18 or complementary shape formed within the capsule 10. The rear end of the insert 12 is provided with an outer shoulder 19 designed to engage tightly the inner circumference of the capsule 10. The rear end of the insert 12 is counterbored to provide a thin-walled portion along at least part of the shoulder 19. Vent grooves 20 are provided to facilitate the evacuation of the capsule 10.

In Figure 2, the preformed braided fibre tube 15 is shown slipped over and mounted onto the insert 12. The braided fibre tube 15 has a loose mesh braid of a type that may be dispensed from a storage roll and slip fitted over the insert 12. The braze foil 16 is wrapped around the braided fibre tube 15 to form an overlying layer. The insert 12, the braided fibre tube 15 and the braze foil 16 comprise an assemblage 21 which is designed to be closely received within the capsule 10 as best shown in Figure 3.

Figure 3 illustrates a retort 25 used for pressure bonding the capsule 10, in accordance with a preferred method embodying the invention, as described hereinafter. The retort 25 includes two supports or uprights 23, 24 upon which the capsule 10 is carried. The capsule 10 is schematically shown attached to a vacuum pump via a connector 26 mounted in a removable head 27. The head 27 is sealingly fixed to a body 28 of the retort 25 via bolts 29 and a seal 30 in a known manner. A connection 31 is provided for pressurising the retort 25 via an external pressure source. Integral means (not shown) may be provided for heating the retort 25, or the retort itself can be placed in a suitable environment, such as a furnace, to effect overall heating of the retort 25, the capsule 10 and the assemblage 21. In accordance with the method embodying the invention, the braided fibre tube 15 is slipped over the metallic insert 12. One or both ends of the braided fibre tube 15 are pulled, for example both ends are pulled in opposite directions, to apply tension to the fibres of the braided fibre tube 15 and to bring the braid into intimate contact with the insert 12, thereby forming a fibre lay-up for matrix infiltration. In one preferred technique, the ends of the braided fibre tube 15 are pulled so as to protrude beyond the ends of the insert 12 and are then tied to prevent shifting of the tensioned braided fibre tube 15. The braze foil 16 is subsequently wrapped around the fibre lay-up so as to cover the entire length of the insert 12. The braze foil 16 is fixedly secured to the insert 12, for example by capacitance discharge spot welding at intermittent locations. If multiple layer fibre reinforcement is desired, additional layers of braided fibre tube and braze foil may be placed over the initial assemblage 21. The so-formed assemblage 21 is inserted into the capsule 10.

The rear end of the capsule 10 is seal welded to the shoulder of the insert 12, at 32, and then evacuated.

Braze bonding of the capsule 10 and the encapsulated assemblage 21 is accomplished by a three-step heat treatment cycle. First, the temperature is increased and isostatic pressure is applied to creep collapse the outer capsule 10 onto the braided fibre tube 15 and braze foil 16 layer, or multilayers as the case may be, at a temperature below the flow point of a braze alloy of the braze foil. The temperature is then raised to a higher value to trigger flow of the braze alloy. The temperature is held at this higher level for a short period of time and then dropped to a lower level for solidification and a final solution/diffusion anneal. Autoclaving is preferred over atmosphere pressure bonding as it accelerates the creep collapse process and thus shortens the overall length of the bond cycle.

Three major factors must be considered in selection of the braze alloy. First, the flow point of the braze alloy preferably is well below the incipient melting point and the grain coarsening range of the metal matrix alloy. Second, the braze foil preferably contains at least one alloy constituent that promotes wetting of the reinforcing fibres to obtain a bond. Third, the wetting action must be controllable to avoid excessive fibre erosion. If the braze foil does not contain a constituent that will chemically interact to wet the fibres and if the wetting action is not controllable, then the fibres can be precoated.

The preferred method embodying the invention has been successfully demonstrated using Nicalon R (Trade Mark) silicon carbide (SiC) fibre, marketed by the Nippon Carbon Company, Ltd., Japan, having a nominal diameter of 14 to 19 micrometres, that was thermally treated at 677°C, (1250°F) for 15 minutes to vapourise a sizing compound. A braze foil utilised to incorporate the SiC fibre between inner and outer aluminium layers comprised an aluminium brazing sheet composed of an outer cladding or layer representing the actual brazing alloy and a core (alloy 3003) that acted as a backing material. The cladding, AWS Class BAISi-2, has a nominal silicon content of 7.5% and melts in the temperature range of 577 to 613°C (1070 to 1135°F). Aluminium 6063 was chosen as the material of the capsule and the insert due to its intermediate strength characteristics and its high incipient melting point, which is greater than 621°C (1150°F).

**Claims**

1. A method of fabricating a fibre-reinforced metal matrix composite, the method comprising the steps of:
   (a) fitting a braided fibre tube (15) over a metallic core (12);
   (b) applying tension to bring the braided fibre tube (15) into contact with the core (12);
   (c) fixing the tensioned braided fibre tube (15) in place relative to the core (12);
   (d) mounting a braze foil (16) around the braided fibre tube (15);
   (e) securing the braze foil (16);
   (f) inserting the so-assembled assembly (21) of the core (12), the braided fibre tube (15) and the braze foil (16) into a capsule (10);
   (g) evacuating the capsule (10);
   (h) applying increasing temperature and pressure to the capsule (10) to collapse the capsule (10) onto the assembly (21), the temperature being below the flow point of the braze foil (16);

(i) further raising the temperature to above the flow point of the braze alloy of the braze foil (16) to induce flow of the braze alloy;

(j) maintaining the raised temperature for a short time; and

(k) lowering the temperature to a value below the flow point of the braze foil (16) and maintaining said lower temperature to allow solidification and annealing of the resulting fibre reinforced metal matrix composite.

2. A method according to claim 1, wherein the flow point of the braze alloy of the braze foil (16) is well below the incipient melting point and the grain coarsening range of the metal matrix alloy.

3. A method according to claim 1 or claim 2, wherein the braze foil (16) contains at least one alloy that chemically interacts with the reinforcing fibres to wet the fibres and obtain a bond.

4. A method according to claim 1, claim 2 or claim 3, wherein the core (12) comprises a bar.

5. A method according to claim 1, claim 2 or claim 3, wherein the core (12) comprises a tube.

6. A method according to any one of claims 1 to 5, wherein the core (12) consists essentially of aluminium.

7. A method according to any one of claims 1 to 5, wherein the core (12) consists essentially of an aluminium alloy.

8. A method according to any one of the preceding claims, wherein the braze foil (16) consists essentially of aluminium and silicon.

## Patentansprüche

1. Verfahren zur Herstellung eines faserverstärkten Metallmatrixverbundes, wobei das Verfahren folgende Schritte aufweist:

a) Anbringen eines Geflechtfaserrohres (15) über einen metallischen Kern (12);

b) Unterzugspannungsetzen, um das Geflechtfaserrohr (15) mit dem Kern (12) in Berührung zu bringen;

c) Befestigen des unter Zugspannung gesetzten Geflechtfaserrohres (15) am Platz relativ zum Kern (12);

d) Anbringen einer Lötfolie (16) um das Geflechtfaserrohr (15) herum;

e) Sichern der Lötfolie (16);

f) Einführen der auf diese Art zusammengebauten Anordnung (21) des Kernes (12), des Geflechtfaserrohres (15) und der Lötfolie (16) in eine Kapsel (10);

g) Evakuieren der Kapsel (10);

h) Anwenden steigender Temperatur und steigenden Druckes auf die Kapsel (10), um diese auf die Anordnung (21) zu schrumpfen, wobei die Temperatur unter dem Fließpunkt der Lötfolie (16) liegt;

i) weiteres Anheben der Temperatur über den Fließpunkt der Lötlegierung der Lötfolie (16), um ein Fließen der Lötlegierung einzuleiten;

j) Halten der erhöhten Temperatur eine kurze Zeit lang; und

k) Absenken der Temperatur auf einen Wert unter dem Fließpunkt der Lötfolie (16) und Halten der niedrigeren Temperatur, um die Verfestigung und ein Tempern des sich ergebenden faserverstärkten Metalmatrixverbundes zu erlauben.

2. Verfahren nach Anspruch 1, wobei der Fließpunkt der Lötlegierung der Lötfolie (16) gut unter dem Anfangsschmelzpunkt und dem Kornvergröberungsbereich der Metallmatrixlegierung liegt.

3. Verfahren nach Anspruch 1 oder Anspruch 2, wobei die Lötfolie (16) mindestens eine Legierung enthält, die chemisch mit den Verstärkungsfasern wechselwirkt, um die Faser zu benetzen und eine Bindung zu erhalten.

4. Verfahren nach Anspruch 1, Anspruch 2 oder Anspruch 3, wobei der Kern (12) eine Stange aufweist.

5. Verfahren nach Anspruch 1, Anspruch 2 oder Anspruch 3, wobei der Kern (12) ein Rohr aufweist.

6. Verfahren nach einem der Ansprüche 1 bis 5, wobei der Kern (12) im wesentlichen aus Aluminium besteht.

7. Verfahren nach einem der Ansprüche 1 bis 5, wobei der Kern (12) im wesentlichen aus einer Aluminiumlegierung besteht.

8. Verfahren nach der vorhergehenden Ansprüche, wobei die Lötfolie (16) im wesentlichen aus Aluminium und Silizium besteht.

## Revendications

1. Procédé de fabrication d'un matériau composite à matrice de métal renforcé à l'aide de fibres, comportant les opérations consistant à:

(a) ajuster un tube de fibres tressées (15) au-dessus d'une âme métallique (12);

(b) appliquer une tension pour amener le tube de fibres tressées (15) en contact avec l'âme (12);

(c) fixer le tube de fibres tressées tendu (15) en position par rapport à l'âme (12);

(d) disposer une feuille de brasure (16) autour du tube de fibres tressées (15);

(e) fixer la feuille de brasure (16);

(f) introduire l'assemblage ainsi assemblé (21) de l'âme (12), du tube de fibres tressées (15) et de la feuille de brasure (16) dans une capsule (10).

(g) vider la capsule (10);

(h) appliquer une température et une pression croissantes à la capsule (10) pour faire s'affaisser la capsule (10) sur l'assemblage (21), la température se trouvant au-dessous du point d'écoulement de la feuille de brasure (16);

(i) augmenter à nouveau la température au-dessus du point d'écoulement de l'alliage de brasure de la feuille de brasure (16) pour provoquer un écoulement de l'alliage de brasure;

(j) maintenir la température accrue pendant une courte période de temps; et

(k) abaisser la température à une valeur inférieure au point d'écoulement de la feuille de brasure (16) et maintenir ladite température abaissée pour permettre une solidification et un recuit du matériau composite à matrice de métal renforcé à l'aide de fibres résultant.

2. Procédé selon la revendication 1, dans lequel le point d'écoulement de l'alliage de brasure de la feuille de brasure (16) est bien inférieur au point de fusion initial et de la plage de granulation plus marquée de la plage de la matrice de métal.

3. Procédé selon la revendication 1 ou la revendication 2, dans lequel la feuille de brasure (16) contient au moins un alliage qui interagit chimiquement avec les fibres de renforcement pour mouiller les fibres et obtenir une liaison.

4. Procédé selon la revendication 1, la revendication 2 ou la revendication 3, dans lequel l'âme (12) comporte un barreau.

5. Procédé selon la revendication 1, la revendication 2 ou la revendication 3, dans lequel l'âme (12) comporte un tube.

6. Procédé selon l'une quelconque des revendications 1 à 5, dans lequel l'âme (12) est constituée essentiellement d'aluminium.

7. Procédé selon l'une quelconque des revendications 1 à 5, dans lequel l'âme (12) est constituée essentiellement d'un alliage d'aluminium.

8. Procédé selon l'une quelconque des revendications précédentes, dans lequel la feuille d'alliage (12) est constituée essentiellement d'aluminium et de silicium.

FIG. I

FIG. 2

FIG. 3